# EUROPEAN PATENT APPLICATION

(11) **EP 1 962 270 A1**
(43) Date of publication of application: **27.08.2008**
(21) Application number: 07021169.3
(22) Date of filing: 30.10.2007
(51) Int. Cl.: G09G 3/36, G02F 1/1345

(54) **Display device with polarity inversion driving**

(30) Priority: 23.02.2007 KR 20070018180
(71) Applicant: Samsung Electronics Co., Ltd., Yeongtong-gu Suwon-city, Gyeonggi-do 442-742 (KR)
(72) Inventor: Lee, Min-Cheol, Gyeonggi-do (KR); Ra, Dong-Gyun, Chungcheongnam-do (KR)
(74) Representative: Dr. Weitzel & Partner

(57) **Abstract**

A display device includes a display panel (100c), a first source driver chip (251) and a connection section (430,440). The display panel includes a plurality of source lines (DL1-DL2k+1), each of which is electrically connected to a plurality of pixels. The first source driver chip is electrically connected to a first group (DL1-DLk) including the first of the source lines (DL1) to output a data signal having a first polarity to the first source line (DL1). The connection section (430,440) electrically connects the first source line (DL1) to the last source line (DL2k+1) to provide the data signal having the first polarity to the last source line without need for an additional source driver chip to drive the (mk+1)-th source line.

## Description

### BACKGROUND OF THE INVENTION

### Field of the Invention

The present invention relates to a display device and, more particularly, to a display device having reduced manufacturing costs.

### Description of the Related Art

Generally, a liquid crystal display (LCD) device includes an LCD panel and a printed circuit board (PCB) having a driver chip to drive the LCD panel, source tape carrier packages (TCPs) electrically connecting the LCD panel and the PCB and having a source driver chip, and gate TCPs having a gate driver chip.

In order to reduce the size and the manufacturing costs of the LCD device, the gate TCP may be omitted and the gate driving circuit directly formed on the LCD panel.

In addition, in order to reduce the number of source driver chips, a horizontal pixel structure, that is, a structure in which pixels having different colors are connected to one source line, is employed in the LCD device. The horizontal pixel structure includes a red color pixel, a green color pixel and a blue color pixel arranged in the vertical direction and having a long horizontal side and a short vertical side. When the horizontal pixel structure is employed in the LCD device, the red, green and blue pixels are electrically connected to the same source line. Thus, the number of the source lines is reduced by one-third.

The horizontal pixel structure employs a column inversion driving method, in which data voltages having different polarities are applied to adjacent source lines to compensate for the reduced charging time and reduced power consumption. In the column inversion driving method, pixels arranged in a vertical row are alternately connected to adjacent source lines to obtain a dot inversion effect.

### SUMMARY OF THE INVENTION

In one aspect of the present invention, a display device includes a display panel, a first source driver chip and a connection section. The display panel includes a plurality of source lines, each of which is electrically connected to a plurality of pixels. The first source driver chip is electrically connected to a first group including a first source line of the source lines to output a data signal having a first polarity to the first source line. The connection section electrically connects the first source line to a last source line of the source lines to provide the data signal having the first polarity to the last source line.

The connection section may directly connect an end portion of the first source line to an end portion of the last source line.

In an exemplary embodiment, the display device may further include a first source tape carrier package (TCP) having the first source driver chip, a first end portion of the first source TCP electrically connected to the display panel, a printed circuit board (PCB) electrically connected to a second end portion of the first source TCP, a second source driver chip electrically connected to a second group including predetermined source lines of the source lines, and a second source TCP having the second source driver chip and electrically connecting the display panel and the PCB to each other.

The connection section may include a first dummy pattern formed on the first source TCP and electrically connected to the first source line, a second dummy pattern formed on the PCB and electrically connected to the first dummy pattern, and a third dummy pattern formed on the second source TCP and electrically connecting the second dummy pattern and the last source line to each other.

The connection section may include a first connection line formed on the display panel to electrically connect an end portion of the first source line to an end portion of the last source line and a second connection line configured to electrically connect the first source line to the last source line via the first source TCP, the PCB and the second source TCP.

According to the above, a first source line and a last source line are electrically connected to each other to thereby remove a source driver chip that is additionally provided to drive the last source line. Thus, the manufacturing costs of a display device may be reduced.

### BRIEF DESCRIPTION OF THE DRAWINGS

The above and other features and advantage points of the present invention will become more apparent by describing in detailed exemplary embodiments thereof with reference to the accompanying drawings, in which:

FIG. 1 is a circuit diagram illustrating a method of driving a display panel according to a first exemplary embodiment of the present invention;

FIG. 2 is a circuit diagram illustrating a method of driving a display panel according to a second exemplary embodiment of the present invention;

FIG. 3 is a plan view illustrating a display device according to a third exemplary embodiment of the present invention;

FIG. 4 is a plan view illustrating a display device according to a fourth exemplary embodiment of the present invention; and

FIG. 5 is a plan view illustrating a display device according to a fifth exemplary embodiment of the present invention.

### DESCRIPTION OF THE EMBODIMENTS

It will be understood that when an element or layer is referred to as being "on," "connected to" or "coupled to" another element or layer, it can be directly on, connected or coupled to the other element or layer or intervening elements or layers may be present. In contrast, when an element is referred to as being "directly on," "directly connected to" or "directly coupled to" another element or layer, there are no intervening elements or layers present.

Hereinafter, the present invention will be described in detail with reference to the accompanying drawings.

### Embodiment 1 (Display Panel)

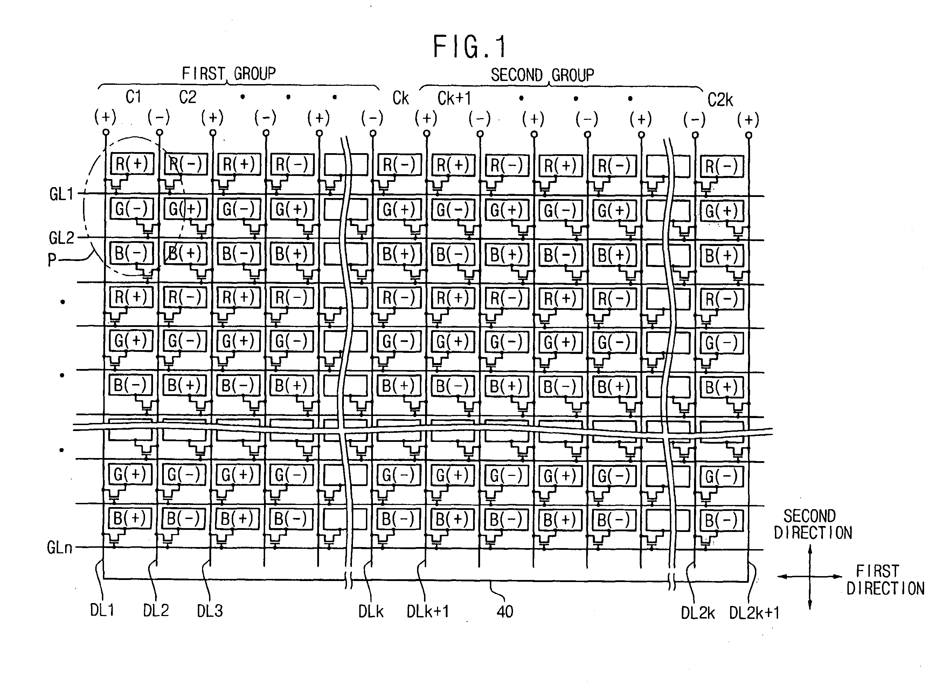

FIG. 1 is a circuit diagram illustrating a method of driving a display panel according to a first exemplary embodiment of the present invention.

Referring to FIG. 1, a display panel includes a plurality of gate lines GL1, ..., GLn extending in a first direction and a plurality of source lines DL1, ..., DL2k+1 extending in a second direction crossing the first direction. Unit pixel sections P are defined by the gate lines GL1, ..., GLn and the source lines DL1, ..., DL2k+1. Here, 'n' and 'k' are natural numbers.

Each of the unit pixel sections P includes pixels of different color from each other, for example, a first pixel R having a red color, a second pixel G having a green color and a third pixel B having a blue color. Each of the first, second and third pixels R, G and B are electrically connected to one of adjacent source lines DL1 and DL2. The first, second and third pixels R, G and B include switching elements electrically connected to three gate lines GL1, GL2 and GL3, respectively.

Each of the first, second, and third pixels R, G and B has a long side extending in the first direction, for example, a horizontal direction and a short side extending in the second direction, for example, a vertical direction. Each of the unit pixel sections P has the first, second and third pixels R, G and B arranged in the second direction.

The pixels that are arranged along "a vertical row defined between adjacent source lines" (hereinafter referred to as "column") are electrically connected to the adjacent source lines alternately. A positive (+) data voltage and a negative (-) data voltage that are inverted with respect to a reference voltage are applied to the adjacent source lines in accordance with a column inversion method. Thus, the column pixels are alternately connected to the adjacent source lines receiving data voltages having polarities of (+) and (-) to obtain a dot-inversion effect through the column inversion method.

For example, pixels arranged in a first column C1 are formed between a first source line DL1 receiving a positive (+) data voltage and a second source line DL2 receiving a negative (-) data voltage. The pixels of the first column C1 are alternately connected to the first source line DL1 and the second source line DL2 twice each, to receive inverted data voltages such as (-), (-), (+), (+), (-), (-), etc.

For example, pixels arranged in a second column C2 are formed between the second source line DL2 receiving a negative (-) data voltage and a third source line DL3 receiving a positive (+) data voltage. The pixels of the second column C2 are alternately connected to the second source line DL2 and the third source line DL3 to receive data voltages inverted with respect to the pixels of the first column C1. The pixels of the second column C2 receive inverted data voltages such as (+), (+), (-), (-), (+), (+), etc.

As a result, the display panel may obtain a one-by-two dot inversion effect that has a one-dot inversion in the first direction and a two-dot inversion in the second direction through the column inversion method.

The display panel that obtains the dot inversion effect through the column inversion method includes two source lines to apply data voltages having polarities of (-) and (+) to pixels of a last column C2k. For example, the display panel includes an additional (2k+1)-th source line DL2k+1 besides a (2k)-th source line DL2k.

The display panel includes a connection section 40 electrically connecting the initial source line DL1 of the source lines and the last source line DL2k+1 of the source lines to each other. Hereinafter, the initial source line DL1 is referred to as a "first source line," and the last source line DL2k+1 is referred to as a "(2k+1)-th source line."

The positive (+) data voltage applied to the first source line DL1 is also applied to the (2k+1)-th source line DL2k+1 electrically connected to the first source line DL1 through the connection section 40.

Accordingly, the pixels of the (2k)-th column C2k, which is the last column, receive the negative (-) data voltage from the (2k)-th source line DL2k, and receives the positive (+) data voltage from the (2k+1)-th source line DL2k+1 electrically connected to the first source line DL1 through the connection section 40, thereby obtaining a two-dot inversion in the second direction.

For example, when the display panel has a resolution of 2kxn as shown in FIG. 1, and includes a source driver chip having k output pins to drive the display panel having the resolution, the display panel requires two source driver chips and an additional source driver chip to drive the (2k+1)-th source line, thereby increasing manufacturing costs. Thus, the first source line DL1 and the (2k+1)-th source line DL2k+1 may be electrically connected to each other through the connection section 40, to overcome the above-mentioned problems.

### Embodiment 2 (Display Panel)

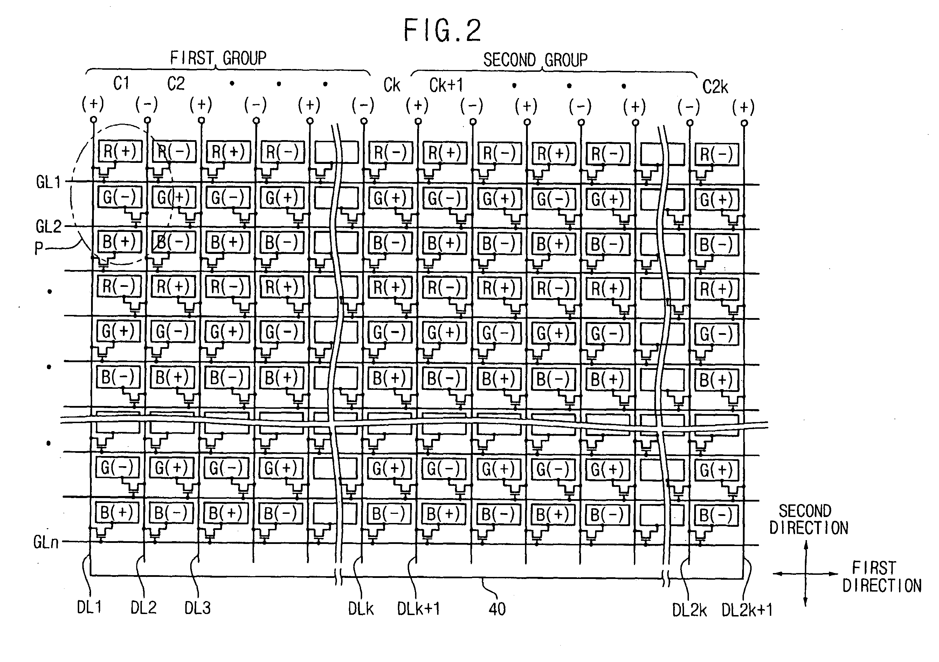

FIG. 2 is a circuit diagram illustrating a method of driving a display panel according to a second exemplary embodiment of the present invention. The display panel illustrated in FIG. 2 corresponds to a one-by-one dot inversion type, which is different from the one-by-two dot inversion type illustrated in FIG. 1.

Referring to FIG. 2, pixels arranged in a first column C1 are formed between a first source line DL1 receiving a positive (+) data voltage and a second source line DL2 receiving a negative (-) data voltage. The pixels of the first column C1 are alternately connected to the first source line DL1 and the second source line DL2 once each, to receive inverted data voltages such as (-), (+), (-), (+), (-), (+), etc.

Pixels of a second column C2 are formed between the second source line DL2 receiving a negative (-) data voltage and a third source line DL3 receiving a positive (+) data voltage. The pixels of the second column C2 are alternately connected to the second source line DL2 and the third source line DL3 to receive data voltages inverted with respect to the pixels of the first column Cl, such as (+), (-), (+), (-), (+), (-), etc.

As a result, the display panel may obtain a one-by-one dot inversion effect that has a one-dot inversion in the first direction and a one-dot inversion in the second direction through the column inversion method.

The display panel includes a connection section 40 electrically connecting the initial source line DL1 of the source lines and the last source line DL2k+1 of the source lines to each other. Thus, the (2k+1)-th source line DL2k+1 electrically connected to the first source line DL1 may receive the positive (+) data voltage applied to the first source line DL1 through the connection section 40.

### Embodiment 3 (Display Device)

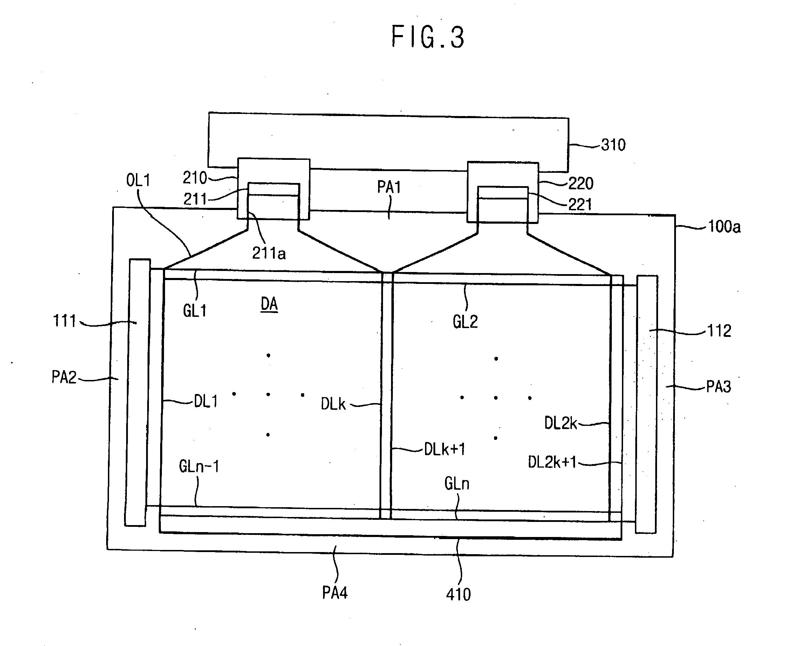

FIG. 3 is a plan view illustrating a display device according to a third exemplary embodiment of the present invention.

Referring to FIGS. 1 and 3, display device includes a display panel 100a, a plurality of source tape carrier packages (TCPs) 210 and 220, a printed circuit board (PCB) 310 and a connection section 410. Hereinafter, "tape carrier package" is referred to as "TCP."

The display panel 100a includes two facing substrates, a liquid crystal layer interposed between the two substrates. The display panel 100a has a display area DA and first, second, third and fourth peripheral areas PA1, PA2, PA3 and PA4 enclosing the display area DA.

As shown in FIGS. 1 and 2, the display area DA has pixels, for example, defined by gate lines GL1, ..., GLn and source lines DL1, ..., DL2k+1. The display panel 100a uses a driving method that obtains a dot inversion effect through a column inversion method.

The source TCPs 210 and 220 are mounted on the first peripheral area PA1.

First and second gate driving sections 111 and 112 are disposed on the second peripheral area PA2 and the third peripheral area PA3 opposite to the second peripheral area PA2, respectively, to output gate signals to the gate lines GL1, ..., GLn. The first and second gate driving sections 111 and 112 may be integrated on the display panel 100a. Alternatively, the first and second gate driving sections 111 and 112 may be mounted on the display panel 100a through a TCP.

The first gate driving section 111 outputs gate signals to odd-numbered gate lines GL1, ..., GLn-1, and the second gate driving section 112 outputs gate signals to even-numbered gate lines GL2, ..., GLn. Alternatively, one gate driving section may be formed on one of the second and third peripheral areas PA2 and PA3 to output gate signals to the gate lines GL1, ..., GLn.

The connection section 410 is formed on the fourth peripheral area PA4. The connection section 410 directly connects an end portion of the first source line DL1 of the source lines DL1, ..., DL2k+1 to an end portion of the (2k+1)-th source line DL2k+1 of the source lines DL1, ..., DL2k+1.

For example, a first source TCP 210 and a second source TCP 220 are formed on the first peripheral area PA1. The first source TCP 210 has a first source driver chip 211 that outputs data voltages to a first group including k source lines DL1, ..., DLk. A first end portion of the first source TCP 210 is electrically connected to the PCB 310, and a second end portion of the first source TCP 210 is electrically connected to pads formed on the first peripheral area PA1. The first source driver chip 211 outputs data voltages inverted with respect to a reference voltage to adjacent source lines DL1 and DL2.

A first output terminal 211a of the first source driver chip 211 is electrically connected to the first source line DL1 through a first output line OL1 of a fan out section, to output the positive (+) data voltage to the pixels of the first column C1 connected to the first source line DL1. The first source driver chip 211 outputs the negative (-) data voltage to the pixels of the first column C1 connected to the second source line DL2 that is adjacent to the first source line DL1.

The first output terminal 211 a of the first source driver chip 211 is electrically connected to the first source line DL1 through the connection section 410, to output the positive (+) data voltage to the pixels of (2k)-th column C2k electrically connected to the (2k+1)-th source line DL2k+1.

The second source TCP 220 has a second source driver chip 221 that outputs data voltages to a second group including k source lines DLk+1, ..., DL2k. A first end portion of the second source TCP 220 is electrically connected to the PCB 310, and a second end portion of the second source TCP 220 is electrically connected to pads formed on the first peripheral area PA1. The second source driver chip 221 outputs data voltages inverted with respect to a reference voltage to adjacent source lines DLk+1 and DLk+2. The second source driver chip 221 outputs the negative (-) data voltage to the (2k)-th source line DL2k adjacent to the (2k+1)-th source line DL2k+1. Thus, the pixels of the (2k)-th column C2k connected to the (2k)-th source line DL2k receive the negative (-) data voltage.

As a result, the first source driver chip 211 of the display device may apply the positive (+) data voltage to the (2k+1)-th source line DL2k+1 electrically connected to the first source line DL1 through the connection section 410. Thus, an additional source driver chip that drives the (2k+1)-th source line DL2k+1 may be omitted.

### Embodiment 4 (Display Device)

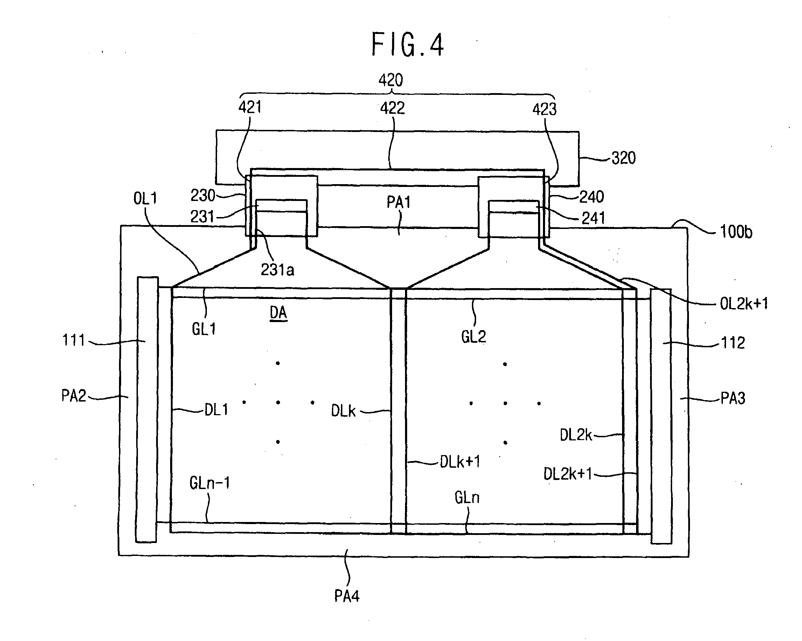

FIG. 4 is a plan view illustrating a display device according to a fourth exemplary embodiment of the present invention.

Referring to FIG. 4, the display device includes a display panel 100b, a plurality of source TCPs 230 and 240, a PCB 320 and a connection section 420.

As shown in FIGS. 1 and 2, the display area DA has pixels, for example, defined by gate lines GL1, ..., GLn and source lines DL1, ..., DL2k+1. The display panel 100b uses a driving method that obtains a dot inversion effect through a column inversion method.

The source TCPs 230 and 240 are mounted on the first peripheral area PA1. First and second gate driving sections 111 and 112 are formed on the second and third peripheral areas PA2 and PA3.

For example, a first source TCP 230 and a second source TCP 240 are formed on the first peripheral area PA1. The first source TCP 230 has a first source driver chip 231 that outputs data voltages to a first group including k source lines DL1, ..., DLk. A first end portion of the first source TCP 230 is electrically connected to the PCB 320, and a second end portion of the first source TCP 230 is electrically connected to pads formed on the first peripheral area PA1. The first source driver chip 231 outputs data voltages inverted with respect to a reference voltage to adjacent source lines DL1 and DL2.

A first output terminal 231 a of the first source driver chip 231 is electrically connected to the first source line DL1 through a first output line OL1 of a fan out section, to output the positive (+) data voltage to the pixels of the first column C1 connected to the first source line DL1. The first source driver chip 231 outputs the negative (-) data voltage to the pixels of the first column C1 connected to the second source line DL2 that is adjacent to the first source line DL1.

The second source TCP 240 has a second source driver chip 241 that outputs data voltages to a second group including source lines DLk+1, ..., DL2k. A first end portion of the second source TCP 240 is electrically connected to the PCB 320, and a second end portion of the second source TCP 240 is electrically connected to pads formed on the first peripheral area PA1. The second source driver chip 241 outputs data voltages inverted with respect to a reference voltage to adjacent source lines DLk+1 and DLk+2.

The connection section 420 includes a first dummy pattern 421 of the first source TCP 230, a second dummy pattern 422 of the PCB 320, and a third dummy pattern 423 of the second source TCP 240.

A first end portion of the first dummy pattern 421 is electrically connected to a first output line OL1 connected to the first source line DL1, and a second end portion of the first dummy pattern 421 is electrically connected to the PCB 320. A first end portion of the second dummy pattern 422 is electrically connected to the second end portion of the first dummy pattern 421 , and a second end portion of the second dummy pattern 422 is electrically connected to a first end portion of the third dummy pattern 423. The first end portion of the third dummy pattern 423 is electrically connected to the second dummy pattern 422, and a second end portion of the third dummy pattern 423 is electrically connected to a (2k+1)-th output line OL2k+1 connected to the (2k+1)-th source line DL2k+1.

Thus, since the first source line DL1 and the (2k+1)-th source line DL2k+1 are electrically connected to each other through the connection section 420, the positive (+) data voltage that is output from the first output terminal 231 a of the first source driver chip 231 is transmitted to the (2k+1)-th source line DL2k+1. The negative (-) data voltage is applied to the pixels of the (2k)-th column C2k connected to the (2k)-th source line DL2k.

The second source driver chip 241 outputs the negative (-) data voltage to the (2k)-th source line DL2k adjacent to the (2k+1)-th source line DL2k+1. Thus, the pixels of the (2k)-th column C2k connected to the (2k)-th source line DL2k receive the negative (-) data voltage.

The connection section 420 may have an electrical resistance smaller than the connection section 410 formed on the fourth peripheral area PA4 of the display panel 100a illustrated in FIG. 3, to thereby reduce the signal delay.

### Embodiment 5 (Display Device)

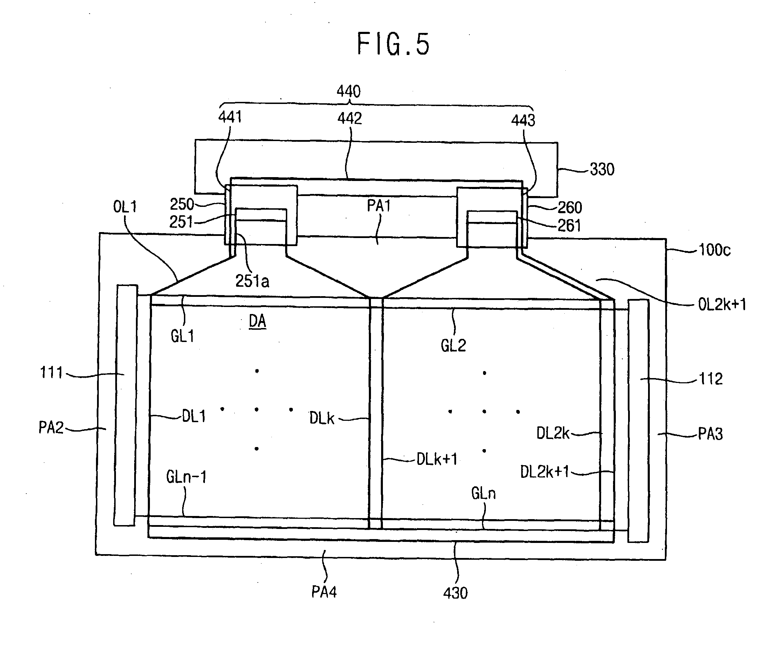

FIG. 5 is a plan view illustrating a display device according to a fifth exemplary embodiment of the present invention.

Referring to FIG. 5, the display device includes a display panel 100c, a plurality of source TCPs 250 and 260, a PCB 330 and a connection section. The connection section includes a first connection line 430 and a second connection line 440.

As shown in FIGS. 1 and 2, the display area DA has pixels, for example, defined by gate lines GL1, ..., GLn and source lines DL1, ..., DL2k+1. The display panel 100c has a driving method that obtains a dot inversion effect through a column inversion method.

The source TCPs 250 and 260 are mounted on the first peripheral area PA1. First and second gate driving sections 111 and 112 are formed on the second and third peripheral areas PA2 and PA3. The first connection line 430 is formed on the fourth peripheral area PA4.

For example, a first source TCP 250 has a first source driver chip 251 that outputs data voltages to a first group including source lines DL1, ..., DLk. A first end portion of the first source TCP 250 is electrically connected to the PCB 330, and a second end portion of the first source TCP 250 is electrically connected to pads formed on the first peripheral area PA1. The first source driver chip 251 outputs data voltages inverted with respect to a reference voltage to adjacent source lines.

A second source TCP 260 has a second source driver chip 261 that outputs data voltages to a second group including source lines DLk+1, ..., DL2k. A first end portion of the second source TCP 260 is electrically connected to the PCB 330, and a second end portion of the second source TCP 260 is electrically connected to pads formed on the first peripheral area PA1. The second source driver chip 261 outputs data voltages inverted with respect to a reference voltage to adjacent source lines.

The first connection line 430 directly connects an end portion of the first source line DL1 to an end portion of the (2k+1)-th source line DL2k+1. A positive (+) data voltage that is output from first output terminal 251a of the first source driver chip 251 is firstly transmitted to the (2k+1)-th source line DL2k+1 through the first connection line 430.

The second connection line 440 electrically connects the first source line DL1 to the (2k+1)-th source line DL2k+1 via the first source TCP 250, the PCB 330 and the second source TCP 260.

For example, the second connection line 440 includes a first dummy pattern 441 of the first source TCP 250, a second dummy pattern 442 of the PCB 330, and a third dummy pattern 443 of the second source TCP 260.

A first end portion of the first dummy pattern 441 is electrically connected to a first output line OL1 connected to the first source line DL1, and a second end portion of the first dummy pattern 441 is electrically connected to the PCB 330. A first end portion of the second dummy pattern 442 is electrically connected to the second end portion of the first dummy pattern 441, and a second end portion of the second dummy pattern 442 is electrically connected to a first end portion of the third dummy pattern 443. The first end portion of the third dummy pattern 443 is electrically connected to the second dummy pattern 442, and a second end portion of the third dummy pattern 443 is electrically connected to a (2k+1)-th output line OL2k+1 connected to the (2k+1)-th source line DL2k+1.

Thus, since the first source line DL1 and the (2k+1)-th source line DL2k+1 are electrically connected to each other through the connection section 440, the positive (+) data voltage that is output from the first output terminal 251 a of the first source driver chip 251 is secondly transmitted to the (2k+1)-th source line DL2k+1. Hence, the positive (+) data voltage is applied to the pixels of the (2k)-th column C2k connected to the (2k+1)-th source line DL2k+1.

The second source driver chip 261 outputs the negative (-) data voltage to the (2k)-th source line DL2k adjacent to the (2k+1)-th source line DL2k+1. Thus, the pixels of the (2k)-th column C2k connected to the (2k)-th source line DL2k receive the negative (-) data voltage.

The data voltage is transmitted to the (2k+1)-th source line DL2k+1 in both directions through the first and second connection lines 430 and 440, to thereby reduce the signal delay much more than Embodiments 3 and 4 illustrated in FIGS. 3 and 4, respectively.

According to the present invention, when the resolution of a display panel corresponds to mkxn (wherein m, k and n are natural numbers) and a source driver chip has k output pins, a first source line and a (mk+1)-th source line are electrically connected to each other so that a source driver chip driving the first source line drives the (mk+1)-th source line.

Accordingly, an additional source driver chip that drives the (mk+1)-th source line may be omitted, thereby reducing manufacturing costs.

Although exemplary embodiments of the present invention have been described, it is understood that the present invention should not be limited to these exemplary embodiments but various changes and modifications can be made by one ordinary skilled in the art within the spirit and scope of the present invention as hereinafter claimed.

## Claims

1. A display device comprising:
a display panel comprising a plurality of source lines each being electrically connected to a plurality of pixels;
a first source driver chip for applying a data signal having a first polarity to a first group of source lines; and
a connection section electrically connecting a first of the source lines to the last of the source lines for applying the data signal having the first polarity to the last of the source lines.

2. The display device of claim 1, wherein data signals having inverted polarities are applied to adjacent ones of the source lines.

3. The display device of claim 2, wherein pixels formed between the adjacent source lines are alternately connected to the adjacent source lines.

4. The display device of claim 1, wherein the display panel further comprises a plurality of gate lines that cross the source lines and are electrically connected to the pixels.

5. The display device of claim 4, wherein each of the pixels has a short side extending in the same direction as the source lines and a long side extending in the same direction as the gate lines.

6. The display device of claim 5, further comprising a gate driving section outputting gate signals to the gate lines.

7. The display device of claim 6, wherein the gate driving section is formed on the display panel corresponding to both end portions of the gate lines.

8. The display device of claim 1, wherein the connection section directly connects an end portion of the first source line to an end portion of the last source line.

9. The display device of claim 8, wherein the connection section is formed on an area of the display panel opposite to the first source driver chip.

10. The display device of claim 1, further comprising a first source tape carrier package (TCP) having the first source driver chip, a first end portion of the first source TCP being electrically connected to the display panel.

11. The display device of claim 10, further comprising:
a printed circuit board (PCB) electrically connected to a second end portion of the first source TCP;
a second source driver chip electrically connected to a second group including predetermined source lines of the source lines; and
a second source TCP having the second source driver chip and electrically connecting the display panel and the PCB to each other.

12. The display device of claim 11, wherein the connection section comprises:
a first dummy pattern formed on the first source TCP and electrically connected to the first source line;
a second dummy pattern formed on the PCB and electrically connected to the first dummy pattern; and
a third dummy pattern formed on the second source TCP and electrically connecting the second dummy pattern and the last source line to each other.

13. The display device of claim 11, wherein the connection section comprises:
a first connection line formed on the display panel to electrically connect an end portion of the first source line to an end portion of the last source line; and
a second connection line configured to electrically connect the first source line to the last source line via the first source TCP, the PCB and the second source TCP.

14. The display device of claim 13, wherein the second connection line comprises:
a first dummy pattern formed on the first source TCP and electrically connected to the first source line;
a second dummy pattern formed on the PCB and electrically connected to the first dummy pattern; and
a third dummy pattern formed on the second source TCP and electrically connecting the second dummy pattern and the last source line to each other.

15. The display device of claim 11, wherein the first group includes k source lines, and the last source line corresponds to an (mk+1)-th source line (wherein m and k are natural numbers).

16. The display device of claim 15, wherein the second source driver chip outputs a data signal having a second polarity to an (mk)-th source line, the second polarity corresponding to an inverted polarity of the first polarity.

17. The display device of claim 1, wherein the pixels electrically connected to one source line comprises pixels having different colors from each other.

18. A display device comprising:
a plurality of gate lines;
a plurality of source lines crossing the gate lines; and
a connection section electrically connecting a first source line to a last source line of the source lines.

19. The display device of claim 18, wherein pixels electrically connected to one source line comprises pixels having different colors from each other.

20. The display device of claim 19, wherein each of the pixels has a short side in an extending direction of the source lines and a long side in an extending direction of the gate lines.

21. The display device of claim 20, wherein the pixels formed between adjacent source lines are alternately connected to the adjacent source lines.

22. The display device of claim 21, wherein data signals having inverted polarities to the adjacent source lines, and data signals having substantially the same polarity are applied to the first source line and the last source line.
